# EUROPEAN PATENT APPLICATION

(11) **EP 1 052 601 A2**
(43) Date of publication of application: **15.11.2000**
(21) Application number: 00107668.6
(22) Date of filing: 10.04.2000
(51) Int. Cl.: G07F 15/00

(54) **Method and apparatus for purchasing energy**

(30) Priority: 08.05.1999 GB 9910642
(71) Applicant: Siemens Metering Limited, Oldbury, Bracknell, Berkshire, RG12 8FZ (GB)
(72) Inventor: Cowburn, William John, Darwen, Lancashire, BB3 2LG (GB)
(74) Representative: Allen, Derek

(57) **Abstract**

The present invention discloses a method and apparatus for prepayment of gas or electricity in which an amount of gas or electricity is paid for in advance. The amount of energy purchased is stored on a smart card and later transferred to a consumer's utility meter, which then enables the consumer to use the energy. The present invention also provides for the compiling of a profile of a consumer's energy usage. This profile is stored on the smart card and used during the purchasing of energy to facilitate the purchase of energy.

## Description

The present invention relates to a method and apparatus for paying for utilities such as gas or electricity. More specifically, the present invention discloses a method and apparatus for prepayment of gas or electricity in which an amount of gas or electricity is paid for in advance. The amount of energy purchased is stored on a smart card and later transferred to a consumer's utility meter, which then enables the consumer to use the energy.

Current methods of prepaying for utilities exist in which a consumer purchases a monetary amount of gas or electricity. This is usually specified in Pounds Sterling or some other suitable currency such as Euros. The monetary amount is stored on the consumer's smart card. When the card is placed into the appropriate slot on the consumer's gas or electricity meter, gas or electricity is allowed to flow up to the monetary valve stored on the card. The charge rate for each unit of gas or electricity is set by the supplier and programmed into the gas or electricity meter. The rate can vary depending on the market conditions. This puts the consumer at a disadvantage in that he does not have any control over the unit price he pays for his gas or electricity. Furthermore, the utility meter must be read or downloaded in order for the appropriate utility company to receive payment for the energy used.

The present invention overcomes this disadvantage by allowing the consumer to purchase in advance a physical amount of gas or electricity. This method is analogous to the way in which a consumer purchases petrol for his car. When purchasing petrol the consumer is free to shop around, select the best price, and then fill his vehicle with petrol purchased at that price. The consumer the uses the petrol as and when he needs it.

Ideally, the consumer would be able to purchase an amount of gas or electricity at a known price and store it in his house for later use. However, due to the nature of gas and electricity generation and storage, this is not possible. The present invention overcomes this problem.

According to the present invention there is provided a method for purchasing energy, said method including the steps of purchasing an amount of energy from a vending point, storing an indication of said amount of energy purchased on a storage means, inserting said storage means into a metering means, detecting said indication of said amount of energy stored on said storage means, transferring said indication of said amount of energy to said metering means thereby enabling energy equal to said amount of energy purchased to flow through said utility meter.

According to an aspect of the present invention, said method includes the further step of causing said metering means to compile a profile of a consumer's energy usage, transferring said profile to said storage means, and using said profile during said step of purchasing an amount of energy to facilitate the purchase of a sufficient amount of energy to meet said consumer's energy needs.

According to the present invention, there is provided apparatus for purchasing energy, said apparatus including storage means, said storage means including a first storage area arranged to store an indication of an amount of energy, vending means arranged to transfer said indication of an amount of energy to said first storage area upon receipt of a payment, metering means arranged to receive said storage means and to detect said indication of an amount of energy and to transfer said indication of an amount of energy to said metering means thereby enabling energy equal to said indication of an amount of energy to flow through said metering means.

According to a further aspect of the present invention, said storage means further includes a second storage area arranged to store a profile of a consumer's energy usage and said metering means is further arranged to compile said profile of said consumer's energy usage and to transfer said profile to said second storage area.

According to a further aspect, said vending means is further arranged to access said profile stored in said second storage area to facilitate the purchase of energy.

According to a further aspect, said storage means is a smart card.

Advantageously, the present invention allows the consumer to shop around and purchase an amount of energy at a more competitive price. The present invention frees the consumer from contracts which bind him to a particular energy provider. Furthermore, the present invention allows the consumer the possibility of purchasing amounts of energy 24 hours a day either via the telephone or at an Automatic Teller type machine.

Advantageously, the present invention eliminates the need for the utility meter to be read or downloaded in order for the utility company which provided the energy to receive payment.

Advantageously, the utility meter no longer needs to be programmed with the charge rate for units of gas or electricity.

While the principle advantages and features of the invention have been described above, a greater understanding and appreciation of the invention may be obtained by referring to the drawings and detailed description of the preferred embodiment, presented by way of example only, in which;
Figure 1 shows a diagram of a consumer purchasing gas or electricity from a vending point according to a preferred embodiment of the present invention.
Figure 2 shows a diagram of a consumer inserting his smart card into a gas or electricity meter according to a preferred embodiment of the present invention.

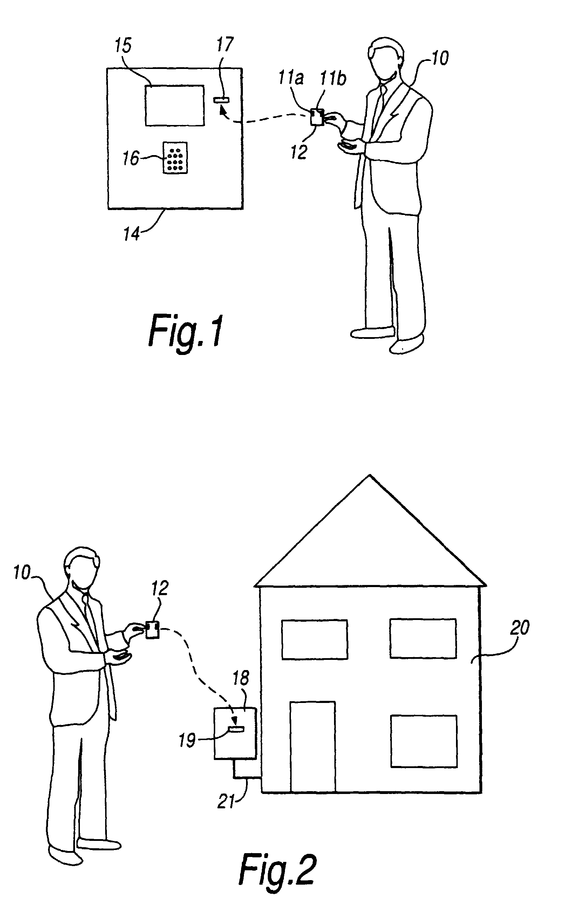

In Figure 1 a consumer 10 is shown with a smart card 12 purchasing gas or electricity from a vending point 14. Smart card 12 includes a first storage area 11a and a second storage area 11b. The first storage area is arranged to store information pertaining to the amount of energy purchased by the consumer. The second storage area is arranged to store information pertaining to the consumer's energy usage profile. As will be appreciated by those skilled in the art, other information can be stored on the smart card. In the present embodiment the vending point 14 is an Automatic Teller machine consisting of display 15, keypad 16, and a slot 17 into which the smart card 12 is inserted. Alternatively, the vending point 14 may be a shop staffed by people. The smart card 12 is credited with an amount of gas or electricity upon receipt of a payment. As will be appreciated, payment can be made electronically or by cash or cheque.

As is well known in the art, the amount of gas purchased may be expressed in cubic meters or cubic feet and the amount of electricity purchased may be expressed in kilowatt hours.

In a further aspect of the present invention, a consumer's energy usage profile is also stored on the smart card 12. The profile may contain information such as the average number of peak and off-peak units of gas or electricity that the consumer uses per day. This information can be used during the purchase of gas or electricity to ensure that the consumer purchases energy at a price applicable to him, based on his energy usage profile.

The following scenario is given as an example of how a preferred embodiment of the present invention might operate. The consumer attends a vending point 14 and inserts his smart card into slot 17. The consumer than requests a monitory amount of energy, for example · 50 of gas. Alternatively, the consumer may specify his energy in other ways. For example, the consumer may request 2 weeks worth of energy. Based on the consumer's energy usage profile stored on his smart card and the vendor will know how many peak and off-peak units of gas and electricity the consumer needs for a 2 week period. The vendor then credited the consumer's smart card with required amount of energy and bills him accordingly. This allows the consumer the opportunity to obtain the best price for his energy, based on his energy usage profile.

In Figure 2, where parts also appearing in Figure 1 bear identical numerical designation, consumer 10 is shown inserting his smart card 12 into slot 19 located on his gas or electricity meter 18. The meter 18 is connected to his house 20 by a connector 21. The meter 18 is arranged to read the smart card. If the meter detects a credit indicating that an amount of gas or electricity has been purchased, the meter transfers this information to the meter. The meter then allows gas or electricity equal to that amount to flow into the house via connector 21. As will be appreciated, the consumer's smart card may be arranged to work only in his utility meter, thus reducing the risk of theft.

As will be appreciated, should the consumer use all of his credited amount of energy, his utility meter can be arranged to provide an emergency amount of energy to the consumer until such time as he can purchase more energy. The amount of emergency energy used can be stored on the smart card and paid for the next time the consumer purchases energy from a vending point.

Alternatively, the utility meter can be configured such that prior to running out of energy, an alarm will sound thereby alerting the consumer to the fact that he is about to have his gas or electricity cut off.

In an alternative embodiment of the present invention, the meter also stores information about the consumer's energy usage. This information may include the amount of energy used, the type of energy, and the time and date of use. This information is used to complete the consumer's energy usage profile and is transferred to and stored on the smart card when the smart card is inserted into the slot 19. The next time the consumer purchases energy from a vending point, the energy usage profile stored on the smart card can be accessed and used as previously described.

In an alternative embodiment of the present invention, the consumer purchases an amount of energy via the telephone. In this alternative embodiment the consumer requires a smart card reading device to be connected to his telephone. The consumer places his smart card into the smart card reading device which is credited with the amount of gas or electricity the consumer has just purchased via the telephone.

In yet a further embodiment, the consumer's telephone line is linked to his utility meter. Upon purchasing an amount of energy, the utility meter is credited with that amount. Thus in this embodiment the need for a smart card is eliminated.

As will be appreciated by those skilled in the art, various modifications may be made to the embodiment herein before described without departing from the scope of the present invention.

## Claims

1. A method for purchasing energy, said method including the steps of:
purchasing an amount of energy from a vending point,
storing an indication of said amount of energy on a storage means,
inserting said storage means into a metering means,
detecting said indication of said amount of energy stored on said storage means,
transferring said indication of said amount of energy to said metering means thereby enabling energy equal to said amount of energy to flow through said metering means.

2. A method as claimed in Claim 1, wherein said method includes the further step of:
causing said metering means to compile a profile of a consumer's energy usage,
transferring said profile to said storage means, and
using said profile during said step of purchasing an amount of energy to facilitate the purchase of a sufficient amount of energy to meet said consumer's energy needs.

3. Apparatus for purchasing energy, said apparatus including:
storage means, said storage means including a first storage area arranged to store an indication of an amount of energy,
vending means arranged to transfer said indication of an amount of energy to said first storage area upon receipt of a payment,
metering means arranged to receive said storage means and to detect said indication of an amount of energy and to transfer said indication of an amount of energy to said metering means thereby enabling energy equal to said indication of an amount of energy to flow through said metering means.

4. Apparatus as claimed in Claim 3, wherein said storage means further includes a second storage area arranged to store a profile of a consumer's energy usage and said metering means is further arranged compile said profile of said consumer's energy usage and to transfer said profile to said second storage area.

5. Apparatus as claimed in Claim 4, wherein said vending means is further arranged to access said profile stored in said second storage area to facilitate the purchase of energy.

6. Apparatus as claimed in Claims 3 to 5, wherein said storage means is a smart card.

7. Apparatus for purchasing energy as hereinbefore described with reference to the accompanying drawings.
